(19) Europäisches Patentamt
European Patent Office
Office européen des brevets

(11) Publication number: 0 211 944
B1

# (12) EUROPEAN PATENT SPECIFICATION

(45) Date of publication of the patent specification: 16.08.89

(51) Int. Cl.⁴: C 08 K 5/43, C 08 L 69/00

(21) Application number: 86901617.0

(22) Date of filing: 13.02.86

(86) International application number: PCT/US 86/00301

(87) International publication number: WO 86/04911 (28.08.86 Gazette 86/19)

## (54) CARBONATE POLYMER COMPOSITIONS CONTAINING A SALT OF AN AROMATIC SULFONAMIDE AND A FREE AROMATIC SULFIMIDE.

(30) Priority: 14.02.85 US 701838

(43) Date of publication of application: 04.03.87 Bulletin 87/10

(45) Publication of the grant of the patent: 16.08.89 Bulletin 89/33

(84) Designated Contracting States: BE CH DE FR GB IT LI NL SE

(56) References cited:
US-A- 4 254 015
US-A- 4 486 560

(73) Proprietor: THE DOW CHEMICAL COMPANY, 2030 Dow Center Abbott Road P.O. Box 1967, Midland Michigan 48640-1967 (US)

(72) Inventor: OGOE, Samuel, A., 308 Linden Street, Angleton, TX 77515 (US)
Inventor: FARAH, Hani, 244 Lakewood Drive, Clute, TX 77531 (US)
Inventor: DICK, Kevin, F., 525 Sycamore Street, Lake Jackson, TX 77566 (US)

(74) Representative: Casalonga, Axel et al, BUREAU D.A. CASALONGA - JOSSE Morassistrasse 8, D-8000 Munich 5 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

This invention relates to carbonate polymer compositions containing additives which act as flame retardants and improve processing stability.

Carbonate polymers derived from reactions of dihydroxyorganic compounds, particularly the dihydric phenols, and carbonic acid derivatives such as phosgene, have found extensive commercial application because of their excellent physical properties. These thermoplastic polymers are suitable for the manufacture of molded parts wherein impact strength, rigidity, toughness, heat resistance and excellent electrical properties are required.

Unfortunately, however, these polymers exhibit a brief but definite burning time when contacted with an open flame. More importantly, as is often the case, the carbonate polymers contain stabilizers and other additives which are often more combustible than the unmodified carbonate polymer. As a result, the modified carbonate polymers frequently exhibit substantially poorer resistance to combustion than does the unmodified carbonate polymer.

In attempts to increase the combustion resistance of carbonate polymers including the modified forms thereof, it has been a common practice to employ monomeric phosphites, phosphoric acid esters, thiophosphoric acid esters containing halogenated alkyl radicals and halogenated organic compounds into the carbonate polymer. However, in order to obtain any noticeable improvement in combustion resistance, these additives have been employed in such large quantities that they often adversely affect many of the desirable physical and mechanical properties of the carbonate polymer.

More recently, for example as taught in U.S. Patent No. 4 254 015; metal salts of aromatic sulfonamides are employed as fire retardant additives in order to retard the combustion of carbonate polymers which are exposed to a low temperature ignition source. Unfortunately, the use of such salts as ignition resistant additives to carbonate polymers can adversely affect the processing stability of the carbonate polymer. As a result, carbonate polymers containing such ignition resistant salt additives can exhibit undesirable molecular weight degradation and can adversely affect optical properties.

In view of the deficiences of the conventional fire retardant carbonate polymer compositions, it would be highly desirable to provide a carbonate polymer composition having improved resistance to burning when exposed to an ignition source, and which composition exhibits good molecular weight stability and optical stablity upon processing.

The present invention is a carbonate polymer composition comprising a carbonate polymer having dispersed therein (1) a salt of an aromatic sulfonamide, said salt being represented by the formula

$$\left( \begin{array}{c} ArSO_2N^{\ominus} \\ | \\ R \end{array} \right)_n \quad M^{\oplus}$$

wherein Ar is an aromatic group, R is a monovalent organic moiety, M is a cation, and n is a number corresponding to the valence of M, in an amount sufficient to retard combustion when the composition is exposed to an ignition source, and (2) a functionally effective amount of a free aromatic sulfimide, said free aromatic sulfimide and amount thereof being selected to provide a desirable degree of molecular weight stability to the carbonate polymer composition upon thermal processing thereof.

Optionally, the carbonate polymer composition of the present invention further comprises a functionally effective amount of a halogenated organic compound.

The fire retardant carbonate polymer compositions of the present invention provide the skilled artisan with a process for providing carbonate polymer compositions which are useful when exposed to an ignition source. Of particular interest are those applications wherein the ignition source is a low temperature ignition source. Said compositions are suitably employed in most applications in which polycarbonates have been previously utilized. Applications of particular interest for the utilization of the said carbonate polymer compositions of this invention are as follows: air filters, fan housings, exterior automobile components, housings for electrical motors, appliances, business and office equipment, photographic equipment, and lighting and aircraft applications.

The carbonate polymers employed in the present invention are advantageously aromatic carbonate polymers such as the trityl diol carbonates described in U.S. Patent Nos. 3 036 036; 3 036 037; 3 036 038 and 3 036 039; polycarbonates of bis-(ar-hydroxyphenyl)-alkylidenes (often called bisphenol-A type diols) including their aromatically and aliphatically substituted derivatives such as disclosed in U.S. Patent Nos. 2 999 835; 3 038 365 and 3 334 154; and carbonate polymers derived from other aromatic diols such as described in U.S. Patent No. 3 169 121.

It is understood, of course, that the polycarbonate may be derived from (1) two or more different dihydric phenols or (2) a dihydric phenol and a glycol or a hydroxy- or acid-terminated polyester or a dibasic acid in the event a carbonate copolymer or interpolymer rather than a homopolymer is desired. Also suitable for the practice of this invention are blends of any one of the above carbonate polymers. Also included in the term «carbonate polymer» are the ester/carbonate copolymers of the types described in U.S. Patent Nos. 3 169 121; 4 287 787; 4 156 069; 4 260 731; 4 330 662; 4 360 656; 4 374 973; 4 225 556; 4 388 455; 4 355 150 and 4 105 633. Of the aforementioned carbonate polymers, the polycarbonates of bisphenol-A and derivatives, including copolycarbonates of bisphenol-A, are preferred. Methods for preparing carbonate polymers for use in the practice of this invention are well known, for example, several suitable methods are disclosed in the aforementioned patents.

The salt form of aromatic sulfonamides which are employed herein are represented by the formula:

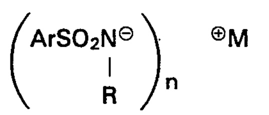

wherein Ar is an aromatic group, R is a monovalent organic moiety, M is a suitable cation such as a metal cation and n is a number corresponding to the valence of M. M is preferably an alkali metal. Alternatively, M is a divalent cation preferably alkali earth or multivalent cation such as, for example, those obtained from copper, aluminum, and antimony. Representative preferred sulfonamide salts include the alkali metal salts of saccharin, N-(tolylsulfonyl)-p-toluene-sulfonamide, N-(N'-benzylaminocarbonyl)-sulfanilamide, N-(phenylcarboxyl)-sulfanilamide, N-(2-pyrimidinyl)sulfanilamide, N-(2-thiazolyl)sulfanilamide and other salts of the sulfonamides disclosed in U.S. Patent No. 4 254 015. Combinations of the above-identified salts can also be employed.

The halogenated organic compound can be virtually any halogenated organic compound commonly used as a fire retardant additive. A functionally effective amount of halogenated organic compound is that amount which provides fire retardant character to the carbonate polymer. The preferred compounds are the halo-substituted aromatic compounds (halo is fluoro, chloro, or bromo). Suitable compounds include, for example, decabromo diphenyloxide, tris-(tribromophenoxy)-triazine, decabromo diphenyl carbonate, a tetrafluoroethylene polymer, an oligomer or polymer of tetrabromo-bisphenol A, and a copolymer of bisphenol A/tetrabromo-bisphenol A. Combinations of the above-identified compounds can be employed. Examples of other suitable monomeric and polymeric halogenated compounds are disclosed in U.S. Patent No. 4 263 201.

The free aromatic sulfimide of this invention is suitably any free imide compound in acid form. Typically, such a compound is one which is capable of introducing a buffering character to the carbonate polymer composition containing an amount of the aforementioned salt form of the aromatic sulfonamide. Typically, the pKa of the imide compound ranges from 1 to 3. Preferred free aromatic sulfimides are the sulfimides described as free sulfonamides disclosed in U.S. Patent No. 4 254 015. Such free aromatic sulfimides are advantageously represented by the formula:

$$(ArSO_2)_2NH$$

where Ar is an aromatic group. It is believed that a functionally effective amount of the free aromatic sulfimide component provides the desired molecular weight stability and maintains the desirable optical properties to the carbonate polymer composition containing the salt of the aromatic sulfimide.

The fire retardant carbonate polymer compositions of the present invention are suitably prepared by combining the carbonate polymer with an effective amount of fire retardant additive using any of a variety of blending procedures conventionally employed for incorporating additives into carbonate polymer resins. For example, dry particulates of the carbonate polymer and the fire retardant additive can be dry blended and the resulting dry blend extruded and molded into the desired shape. By «effective amount» is meant that combination of the desired fire retardant additive components is sufficient to provide fire retardant character to the carbonate polymer with which it is blended.

While any amount of fire retardant additive that imparts to the carbonate polymer an improved fire retardancy is suitable, that amount of additive which provides an effective amount of fire retardancy to the carbonate polymer in combination with the maintenance of good processing stability and desirably good optical properties is particularly desirable. Preferred amounts of components typically range from 0.001 to 2, more preferably 0.01 to 0.5 weight percent salt of an aromatic sulfonamide; from 0 to 20, more preferably from 0.01 to 10, most preferably from 0.01 to 5 weight percent halogenated organic compound; and from 0.001 to 2, more preferably 0.01 to 0.5 weight percent free aromatic sulfimide. All weights are based on the weight of carbonate polymer to which the components are added.

In addition to the aforementioned fire retardant additives, other additives can be included in the carbonate polymer composition of the present invention such as fillers (i.e., a tetrafluoroethylene polymer or glass fibers), pigments, dyes, antioxidants, stabilizers, ultraviolet light absorbers, mold release agents and other additives commonly employed in carbonate polymer compositions.

The following examples are given to further illustrate the invention and should not be construed as limiting its scope. In the following examples, all parts and percentages are by weight unless otherwise indicated.

*Examples 1, 2, 3 and Comparative Runs A and B*

Example 1 is prepared using a bisphenol-A polycarbonate pellet heat stabilized with an organo phosphorus compound as described in U.S. Patent No. 4 474 937, along with 0.06 percent para-tolylsulfimide (HPTSM), 0.6 percent phenoxy terminated tetrabromo bisphenol-A carbonate oligomer having an average of 5 repeating units (TBBPAC), and 0.06 percent potassium para-tolylsulfonamide (KPTSM). The components are mixed for about 5 minutes and the mixture is extruded into pellets at 550°F (288°C) on a twin screw extruder. The pellets are dried on a force draft oven at 250°F (121°C). A portion of the resulting example is subjected to melt shearing at 540°F (282°C) by a torque rheometer for over 30 minutes. The initial and final molecular weight of the example so treated is present in Table I. The remainder of the example is injection molded at 575°F (302°C) into bars and disks for flammability and optical properties.

In a similar manner, Example 2 is prepared using the heat stabilized polycarbonate, 0.06 percent KPTSM, 0.09 percent HPTSM and 0.6 percent TBBPAC.

In a similar manner, Example 3 is prepared using the heat stabilized polycarbonate, 0.06 percent KPTSM, 0.12 percent HPTSM and 0.6 percent TBBPAC.

Comparative Run A is the heat stabilized polycarbonate.

In a similar manner to Example 1, Comparative Run B is prepared using the heat stabilized polycarbonate, 0.06 percent KPTSM and 0.6 percent TBBPAC.

Evaluations of the Examples and Comparative Runs are presented in Table I.

TABLE I

| Examples and Comp. Runs | Polycarbonate Molecular Weight Initial | Final | Change | U-94 Test[(1)] Ave. T (sec) | No. Drips | Rating | Optical Properties[(2)] YI | Trans. (Percent) | Haze (Percent) |
|---|---|---|---|---|---|---|---|---|---|
| 1 | 27,200 | 25,300 | 1,900 | 1.7 | 0/5 | V-0 | 2.7 | 90.2 | 1.7 |
| 2 | 27,200 | 25,400 | 1,800 | 1.5 | 0/5 | V-0 | 2.6 | 90.2 | 1.8 |
| 3 | 27,100 | 25,600 | 1,500 | 1.4 | 0/5 | V-0 | 1.5 | 90.3 | 1.9 |
| A | 27,250 | 25,800 | 1,470 | 10 | 5/5 | V-2 | 2.5 | 90.3 | 1.4 |
| B | 27,000 | 21,000 | 6,000 | 2.6 | 0/5 | V-0 | 2.8 | 89.9 | 1.4 |

(1) Tests are performed on a 1/8 inch (3.175 mm) molded bar. Ave. T. is the average flame time in seconds for 5 bars. No. Drips is the number of bars that drip per 5 bars tested.

(2) YI is yellowness index; Trans (percent) is percent transmittance; Haze (percent) is percent haze.

The data in Table I indicate that Example 1, 2 and 3 exhibit good ignition resistant properties and improved processing stability as indicated by the low change in molecular weight. Correspondingly, Comparative Run B exhibits a large change in molecular weight upon evaluations. Examples 1, 2 and 3 exhibit compatibility of the HPTSM with the carbonate polymer as is illustrated by the negligible change in optical properties of the samples over an untreated sample such as Comparative Run A.

## Claims

1. A carbonate polymer composition comprising a carbonate polymer having dispersed therein (1) a salt of an aromatic sulfonamide, said salt being represented by the formula

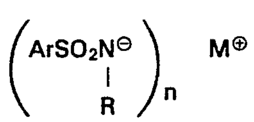

wherein Ar is an aromatic group, R is a monovalent organic moiety, M is a cation, and n is a number corresponding to the valence of M, in an amount sufficient to retard combustion when the composition is exposed to an ignition source, and (2) a functionally effective amount of a free aromatic sulfimide, said free aromatic sulfimide and amount thereof being selected to provide a degree of molecular weight stability to the carbonate polymer composition upon thermal processing thereof.

2. The composition of Claim 1 wherein said carbonate polymer is a homopolycarbonate of bisphenol A.

3. The composition of Claim 1 or 2 wherein said free aromatic sulfimide exhibits a pKa of from 1 to 3.

4. The composition of Claim 3 wherein said free aromatic sulfimide is represented by the formula:

$$(ArSO_2)_2NH$$

wherein Ar is an aromatic group.

5. The composition of Claim 1 wherein the amount of said salt of an aromatic sulfonamide ranges from 0.001 to 2 weight percent and the amount of said free aromatic sulfimide ranges from 0.001 to 2 weight percent, based on the weight of the carbonate polymer.

6. The composition of Claim 5 wherein the amount of said salt of an aromatic sulfonamide ranges from 0.01 to 0.5 weight percent and the amount of said free aromatic sulfimide ranges from 0.01 to 0.5 weight percent, based on the weight of the carbonate polymer.

7. The composition of any of Claims 1 to 6 wherein said salt of an aromatic sulfonamide is potassium p-tolylsulfonamide and said free aromatic sulfimide is p-tolylsulfimide.

8. The composition of any of Claims 1 to 7 which further comprises a functionally effective amount of a halogenated organic compound.

9. The composition of Claim 8 wherein said halogenated organic compound is a halogenated aromatic compound.

10. The composition of Claims 8 or 9 wherein the amount of said halogenated organic compound is up to 20 weight percent, based on the weight of the carbonate polymer.

## Patentansprüche

1. Carbonat-Polymerzusammensetzung, die ein Carbonatpolymer enthält, in dem dispergiert sind (1) ein Salz eines aromatischen Sulfonamids, das dargestellt ist durch die Formel

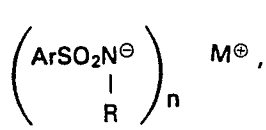

in der Ar eine aromatische Gruppe, R ein einwertiger organischer Anteil, M ein Kation und n eine der Wertigkeit von M entsprechende Zahl ist, in einer Menge, die eine Verbrennung hemmt, wenn die Zusammensetzung einer Entzündungsquelle ausgesetzt wird, und (2) eine funktionell wirksame Menge eines freien aromatischen Sulfimids, das und dessen Menge dazu ausgewählt sind, der Carbonat-Polymerzusammensetzung bei deren Wärmebehandlung ein erwünschtes Ausmaß an Stabilität des Molekulargewichts zu erteilen.

2. Zusammensetzung nach Anspruch 1, in der das Carbonatpolymer ein Homopolycarbonat des Bisphenols A ist.

3. Zusammensetzung nach Anspruch 1 oder 2, in der das freie aromatische Sulfimid einen $pK_a$-Wert von 1 bis 3 aufweist.

4. Zusammensetzung nach Anspruch 3, in der das freie aromatische Sulfimid dargestellt ist durch die Formel

$$(ArSO_2)_2NH,$$

in der Ar eine aromatische Gruppe ist.

5. Zusammensetzung nach Anspruch 1, in der die Menge des Salzes eines aromatischen Sulfonamids sich von 0,001 bis 2 Gewichtsprozent und die Menge des freien aromatischen Sulfimids sich von 0,001 bis 2 Gewichtsprozent, bezogen auf das Gewicht des Carbonatpolymers, erstreckt.

6. Zusammensetzung nach Anspruch 5, in der die Menge des Salzes eines aromatischen Sulfonamids sich von 0,01 bis 0,5 Gewichtsprozent und die Menge des freien aromatischen Sulfimids sich von 0,01 bis 0,5 Gewichtsprozent, bezogen auf das Gewicht des Carbonatpolymers, erstreckt.

7. Zusammensetzung nach einem der Ansprüche 1 bis 6, in der das Salz eines aromatischen Sulfonamids Kalium-p-tolylsulfonamid und das freie aromatische Sulfimid p-Tolylsulfimid ist.

8. Zusammensetzung nach einem der Ansprüche 1 bis 7, die zusätzlich eine funktionell wirksame Menge einer halogenierten organischen Verbindung enthält.

9. Zusammensetzung nach Anspruch 8, in der die halogenierte organische Verbindung eine halogenierte aromatische Verbindung ist.

10. Zusammensetzung nach Anspruch 8 oder 9, in der die Menge der halogenierten organischen Verbindung bis zu 20 Gewichtsprozent, bezogen auf das Gewicht des Carbonatpolymers, beträgt.

**Revendications**

1. Composition de polymère de carbonate comprenant un polymère de carbonate dans lequel sont dispersés (1) un sel d'un sulfonamide aromatique, ledit sel répondant à la formule:

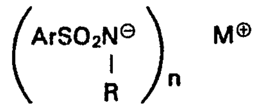

dans laquelle Ar représente un groupe aromatique, R est un fragment organique monovalent, M est un cation et n est un nombre qui correspond à la valence de M, en une quantité suffisante pour retarder la combustion quand la composition est exposée à une source d'ignition et (2) une quantité fonctionnelle efficace d'un sulfimide aromatique libre, ledit sulfimide aromatique libre et la quantité de celui-ci étant choisis de façon à procurer un degré avantageux d'une stabilité de masse moléculaire à la composition de polymère de carbonate lors du traitement thermique de celle-ci.

2. Composition selon la revendication 1, dans laquelle ledit polymère de carbonate est un homopolymère de carbonate de bisphénol A.

3. Composition selon la revendication 1 ou 2, dans laquelle ledit sulfimide aromatique libre possède une valeur pKa comprise entre 1 et 3.

4. Composition selon la revendication 3, dans laquelle ledit sulfimide aromatique libre répond à la formule:

$$(ArSO_2)_2NH$$

dans laquelle Ar est un groupe aromatique.

5. Composition selon la revendication 1, dans laquelle la quantité dudit sel d'un sulfonamide aromatique est comprise entre 0,001 et 2% en poids et la quantité dudit sulfimide aromatique libre est comprise entre 0,001 et 2% en poids par rapport au poids du polymère de carbonate.

6. Composition selon la revendication 5, dans laquelle la quantité dudit sel d'un sulfonamide aromatique est comprise entre 0,01 et 0,5% en poids et la quantité dudit sulfimide aromatique libre est comprise entre 0,1 et 0,5% en poids par rapport au poids du polymère de carbonate.

7. Composition selon l'une quelconque des revendications 1 à 6, dans laquelle ledit sel d'un sulfonamide aromatique est le p-tolylsulfonamide de potassium et ledit sulfimide aromatique libre est le p-tolylsulfimide.

8. Composition selon l'une quelconque des revendications 1 à 7, qui comprend en outre une quantité fonctionnelle efficace d'un composé organique halogéné.

9. Composition selon la revendication 8, dans laquelle ledit composé organique halogéné est un composé aromatique halogéné.

10. Composition selon la revendication 8 ou 9, dans laquelle la quantité dudit composé organique halogéné va jusqu'à 20% en poids par rapport au poids du polymère de carbonate.